(19) **Europäisches Patentamt**

**European Patent Office**

**Office européen des brevets**

(11) **EP 1 159 827 B1**

(12) **EUROPÄISCHE PATENTSCHRIFT**

(45) Veröffentlichungstag und Bekanntmachung des Hinweises auf die Patenterteilung:
**22.01.2003 Patentblatt 2003/04**

(51) Int Cl.⁷: **H04N 5/45**

(21) Anmeldenummer: **00930976.6**

(22) Anmeldetag: **03.03.2000**

(86) Internationale Anmeldenummer:
**PCT/DE00/00681**

(87) Internationale Veröffentlichungsnummer:
**WO 00/052931 (08.09.2000 Gazette 2000/36)**

(54) **Ansteuerung eines Speichers für die Bild-in-Bild-Einblendung**

Controlling a memory used for picture-in-picture display

Contrôle d'une mémoire pour l'incrustation d'images

(84) Benannte Vertragsstaaten:
**DE**

(30) Priorität: **04.03.1999 DE 19909562**

(43) Veröffentlichungstag der Anmeldung:
**05.12.2001 Patentblatt 2001/49**

(73) Patentinhaber: **Infineon Technologies AG
81669 München (DE)**

(72) Erfinder:
• **BRETT, Maik
D-81539 München (DE)**
• **HAHN, Marko
D-81373 München (DE)**

(74) Vertreter: **Banzer, Hans-Jörg, Dipl.-Ing. et al
Kraus & Weisert
Patent- und Rechtsanwälte
Thomas-Wimmer-Ring 15
80539 München (DE)**

(56) Entgegenhaltungen:
EP-A- 0 411 548    EP-A- 0 471 878
EP-A- 0 739 130    WO-A-00/18115

## Beschreibung

Die Erfindung betrifft ein Verfahren zur Bild-in-Bild-Einblendung, bei dem eine Folge von dezimierten Einfügebildern in einen Speicher mit mindestens zwei Segmenten eingeschrieben und zum Einblenden in eine Folge von Hauptbildern ausgelesen wird, und zwar gemäß dem Oberbegriff von Anspruch 1, sowie eine Schaltungsanordnung zur Bild-in-Bild Einblendung, insbesondere zur Durchführung dieses Verfahrens gemäß dem Oberbegriff von Anspruch 6.

Es sind verschiedene Verfahren und Vorrichtungen zur Einblendung eines oder mehrerer Einfügebilder in ein Hauptbild (PIP - Picture In Picture) bekannt. Die in dem Speicher gespeicherten Einfügebilder werden dabei synchron mit einem Hauptbild ausgelesen. Da die Auslesegeschwindigkeit in allgemeinen entsprechend der Dezimation des Einfügebildes höher ist, als die Einschreibgeschwindigkeit, kann aufgrund des Überholens des Schreibzeigers durch den Lesezeiger in dem Einfügebild eine Naht auftreten, da sich das Einfügebild nun aus einem aktuellen und einem vorhergehenden Teil zusammensetzt.

Insbesondere in dem Fall, in dem die beiden Teile aus unterschiedlichen Bewegungsphasen stammen, ergibt sich ein störende Effekt, da bewegte Objekte, durch die die Naht verläuft, verzerrt dargestellt werden. Wenn außerdem die Frequenzen der Einfüge- und Hauptbilder nicht genau übereinstimmen, wandert die Naht, was als besonders unangenehm empfunden wird.

Die Patentschrift EP-A-0 411 548 offenbart eine Speichervorrichtung zum Speichern der Daten eines komprimierten Einfügebildes in ein Hauptbild. Der Speicher hat einen Hauptteil zum Speichern eines Feldes eines Einfügebildes und zwei Puffer zum Speichern jeweils einer Zeile eines Einfügebildes.
Wenn der Lesezeiger für das Auslesen eines Einfügebildes den Schreibzeiger für das Einschreiben eines Einfügebildes überholt, wird eine einzuschreibende Zeile in einen der Puffer eingespeichert. Gleichzeitig wird die Leseadresse auf den anderen Puffer gerichtet.

Die Patentschrift EP-A-0 471 878 zeigt eine Vorrichtung zum Speichern von Daten einer Folge von Einfügebildern die in eine Folge von Hauptbildern einzublenden sind. Dazu ist ein Speicher für Hauptbilder mit zwei Bereichen vorgesehen, von denen jeder auch zum Einschreiben der Daten jeweils eines Einfügebildes vorgesehen ist. Die Bild-in-Bild-Einblendung erfolgt durch synchrones Auslesen des gesamten Speichers. Mittels einer Entscheidungseinrichtung wird bestimmt, aus welchem der zwei Speicherbereiche ein gespeichertes Einfügebild zur Einblendung heranzuziehen ist.

Die Patentschrift EP-A-0 739 130 offenbart eine Vorrichtung zur Bild-in-Bild-Einblendung mit zwei Halbbildspeichern für das Einblendbild. Je nach Bewegungsphase der aus den Halbbildspeichern mit doppelter Zeilenfrequenz ausgelesenen Bildern wird entweder aus dem ersten oder dem zweiten Halbbildspeicher ausgelesen.

Aus der EP-A-0 739 130 ist es zur Vermeidung des obengenannten Problems bekannt, in der Speichereinrichtung zwei Einfügebilder (beziehungsweise jeweils Halbbilder) zu speichern, so daß immer genau ein Bild ausgelesen werden kann, während das nächste Bild geschrieben wird. Zwar wird dadurch ein Überholen des Schreibzeigers durch den Lesezeiger vermieden, ein wesentlicher Nachteil besteht jedoch darin, daß die Speicherkapazität sehr hoch sein muß, was mit erheblichen Kosten verbunden ist.

Der Erfindung liegt deshalb die Aufgabe zugrunde, ein Verfahren sowie eine Schaltungsanordnung zur Bild-in-Bild-Einblendung der eingangs genannten Art zu schaffen, mit dem/der mit relativ geringem Aufwand ein Einfügebild ohne Naht erzeugt werden kann.

Gelöst wird diese Aufgabe mit einem Verfahren nach Anspruch 1, das sich dadurch auszeichnet, daß:

- die Einfügebilder unter fortlaufend inkrementierten Schreibadressen umlaufend in die Speichereinrichtung eingeschrieben werden,
- die erste Adresse jedes eingeschriebenen Einfügebildes gespeichert wird,
- ein Überholsignal durch Vergleich der momentanen Adresse mit einer zuvor gespeicherten Adresse gebildet wird, das anzeigt, ob eine vorherige Adresse wieder erreicht und somit der entsprechende Bildinhalt überschrieben wurde,
- durch Auswertung des Überholsignals das aktuelle oder das vorhergehende Segment zum Auslesen in Abhängigkeit davon ausgewählt wird, ob vor dem Start des Auslesens ein Überholen stattfand oder nicht und
- das in dem ausgewählten Segment gespeicherte Einfügebild mit fortlaufend inkrementierten Leseadressen ausgelesen und in das Hauptbild eingeblendet wird.

Die Aufgabe wird ferner mit einer Schaltungsanordnung nach Anspruch 6 zur Einblendung einer Folge von dezimierten Einfügebildern in eine Folge von Hauptbildern gelöst, die eine Speichereinrichtung mit mindestens zwei Segmenten für die Einfügebilder, eine Schreibsteuerung und eine Lesesteuerung aufweist und die sich insbesondere dadurch auszeichnet, daß mit der Schreibsteuerung ein einer Anzeigesteuerung zuführbares Überholsignal erzeugbar ist, daß ein mit der Lesesteuerung verbundener Segmentpuffer zur Speicherung einer ersten und einer letzten Adresse eines Einfügebildes vorgesehen ist, und daß mit der Anzeigesteuerung in Abhängigkeit von dem Überholsignal ein durch die Lesesteuerung auszulesendes Speichersegment auswählbar ist.

Der erfindungsgemäßen Lösungen liegt die Erkenntnis zugrunde, daß ein Überholen des Schreibzeigers durch den Lesezeiger durch eine geeignete umlaufende Adressierung der Speichereinrichtung unter Ausnutzung der Geschwindigkeitsdifferenz zwischen den Zeigern vermieden werden kann. Ein wesentlicher Vorteil dieser Lösung besteht darin, daß dies sogar dann gilt, wenn sich die Größe des Einfügebildes ändert. Ferner ist es auch nicht erforderlich, vollständig getrennte Speicherbereiche zum Lesen und Schreiben vorzusehen oder die Organisation des Speichers an die Einfügebildgröße anzupassen.

Die Unteransprüche haben vorteilhafte Weiterbildungen der Erfindung zum Inhalt.

Danach werden zum Beispiel die Schreib- und Leseadressen fortlaufend von einer ersten Speicheradresse bis zu einer letzten Speicheradresse inkrementiert und nach dem Erreichen der letzten Speicheradresse jeweils wieder auf die erste Speicheradresse zurückgesetzt.

Zu diesem Zweck ist bei der erfindungsgemäßen Schaltungsanordnung vorzugsweise vorgesehen, daß die Schreibsteuerung und die Lesesteuerung jeweils einen Adreßzähler zum Inkrementieren der Schreib- bzw. Leseadressen aufweisen.

Weitere Einzelheiten, Merkmale und Vorteile der Erfindung ergeben sich aus der folgenden Beschreibung von bevorzugten Ausführungsformen anhand der Zeichnungen. Es zeigen:

Fig. 1 ein Blockschaltbild einer erfindungsgemäßen Schaltungsanordnung;

Fig. 2 ein Diagramm der Signalverläufe beim Einschreiben in einen Bildspeicher;

Fig. 3 ein Diagramm der Signalverläufe beim Auslesen aus einem Bildspeicher;

Fig. 4 eine Darstellung zur Verdeutlichung des Entstehens einer Naht;

Fig. 5 ein Diagramm der erfindungsgemäßen Signalverläufe;

Fig. 6 ein Blockschaltbild einer Schaltungsanordnung zur Auswahl eines Speichersegmentes;

Fig. 7 eine Adreßzeigerdarstellung bei fehlender vertikaler Dezimation;

Fig. 8 eine Darstellung einer Speicheraufteilung bei fehlender vertikaler Dezimation und

Fig. 9 eine Darstellung des Speicheraufwandes im Falle einer Dezimation.

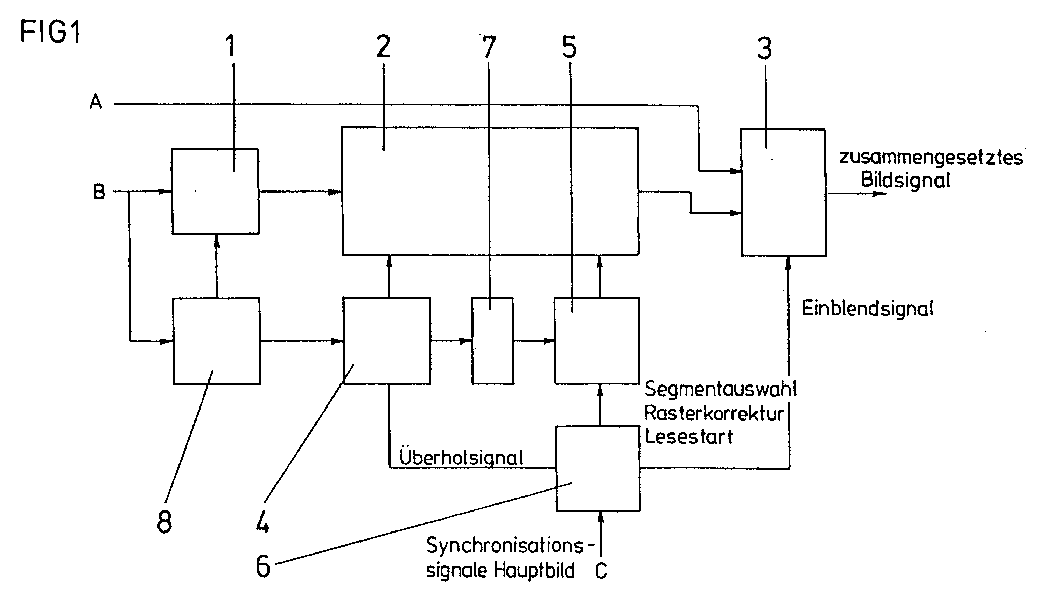

Einer erfindungsgemäßen Schaltungsanordnung wird gemäß Figur 1 über einen ersten Eingang A ein Hauptbildsignal und über einen zweiten Eingang B ein Einfügebildsignal zugeführt. Das Einfügebildsignal gelangt zu einer Dezimationseinrichtung 1 sowie einer Synchronisationseinrichtung 8. Das Bildsignal des im allgemeinen vertikal dezimierten Einfügebildes wird in Form von Halbbildern in einem Speicher 2 zwischengespeichert und nach dem Auslesen zusammen mit dem Hauptbildsignal einer Einblendvorrichtung 3 zugeführt, die ein zusammengesetzes Bildsignal erzeugt.

Die Synchronisationseinrichtung 8 ist über einen ersten Ausgang mit der Dezimationseinrichtung 1 und über einen zweiten Ausgang mit einer Schreibsteuerung 4 verbunden. Ein erster Ausgang der Schreibsteuerung 4 liegt an dem Speicher 2 an, während ein zweiter Ausgang mit einem Segmentpuffer 7 und ein dritter Ausgang mit einer Anzeigesteuerung 6 verbunden ist. Der Ausgang des Segmentpuffers 7 liegt an einer Lesesteuerung 5 an, der auch ein erster Ausgang der Anzeigesteuerung 6 zugeführt wird. Ein Ausgang der Lesesteuerung 5 ist mit dem Speicher 2 verbunden. Ein zweiter Ausgang der Anzeigesteuerung 6 wird schließlich der Einblendvorrichtung 3 zugeführt, wobei die Anzeigesteuerung einen Eingang C für Synchronisationssignale des Hauptbildes aufweist.

Zum Einschreiben eines mit der Dezimationseinrichtung 1 dezimierten Einfügebildsignals in den Speicher 2 erzeugt die Schreibsteuerung 4 die benötigten Adressen. Im einfachsten Fall wird dabei bei einer z. B. linearen Organisation des Speichers 2 nach jedem Schreibvorgang der Schreibadreßzeiger inkrementiert. Erreicht der Adreßzeiger die letzte Speicheradresse, wird er auf die erste Adresse zurückgesetzt, unter der das Einschreiben fortgesetzt wird, wobei dies über die Dauer des Halbbildes mit Unterbrechungen entsprechend der Dezimation erfolgt. Dabei kommt es zwangsläufig zum Überschreiben eines vorangegangenen (Halb-) Bildes.

Mit jedem Beginn eines neuen Halbbildes wird dessen erste Schreibadresse (Schreib-Startadresse) in dem Segmentpuffer 7 abgelegt, der außerdem auch die letzte Adresse speichert. Ferner werden auch die Halbbildlage und -größe in Form von Zeilen anzohl und Pixeln je Zeile in dem Segmentpuffer 7 gespeichert, wobei die jeweils zuvor gespeicherten Daten nicht überschrieben werden. Die Speicherkapazität des Segmentpuffers 7 beträgt also etwa das Doppelte dieser für ein Halbbild zu speichernden Daten, die jeweils einem Halbbild eines zuvor geschriebenen bzw. eines aktuelle geschriebenen Segments im Speicher 2 zugeordnet sind.

Mit jeder Inkrementierung des Schreibzeigers wird mit der Schreibsteuerung 4 außerdem geprüft, ob die neue Adresse einen bestimmten Offset zur zuvor gespeicherten (nicht zur zuletzt aktuell gespeicherten) Schreib-Startadresse aufweist. Dieser Offset kann bei einem hohen vertikalen Dezimationsfaktor auch Null sein. Er dient im wesentlichen als Sicherheitsabstand, um ein Überholen durch asynchrone Datenübernahme oder geringfügig abweichende Vertikalfrequenzen zu vermeiden. Abhängig von diesem Offset wird ein Überholsignal erzeugt, das anzeigt, ob die zuvor gespeicherte Schreib-Startadresse wieder erreicht und damit der zugeordnete Bildinhalt überschrieben wurde.

Der Inhalt des Segmentpuffers 7 wird an die Lesesteuerung 5 übertragen, mit der ab einer der beiden vorhandenen Schreib-Startadressen nach dem Start des Lesens an der entsprechenden Einblendposition der Speicher 2 ausgelesen wird, so daß das Einfügebild entsprechend seiner Lage und Größe durch die Einblendvorrichtung 3 in dem Hauptbild erzeugt werden kann.

Mit der Anzeigesteuerung 6 wird anhand des von der Schreibsteuerung 4 übertragenen Überholsignals entschieden, welches der beiden in dem Speicher 2 vorhandenen Segmente ausgelesen wird. Bei der Auswahl des Segmentes wird zunächst immer von dem zuvor gespeicherten Segment ausgegangen. Erfolgte vor dem Lesestart ein Überholen von dessen Schreib-Startadresse durch den Schreibzeiger, so wird das momentane (aktuell geschriebene) Segment ausgelesen. Ein entsprechendes Segment-Auswahlsignal wird zu der Lesesteuerung 5 übertragen.

Mit der Anzeigesteuerung wird auch die Einblendposition berechnet. Die Anzeigesteuerung 6 dient ferner zur Korrektur der Rasterlagen, die durch einen Vergleich zwischen der Rasterlage eines dargestellten Bildes mit der Rasterlage eines gespeicherten Bildes und durch ein Überspringen oder Wiederholen einer Zeile erfolgt. Schließlich kann die Anzeigesteuerung 6 auch für eine Mehrbildeinblendung genutzt werden.

Vor einer detaillierten Beschreibung des Algorithmus sollen zunächst die in diesem Zusammenhang verwendeten Begriffe erläutert werden.

Die dezimierten Bildpunkte des Einfügebildes werden, wie oben erläutert wurde, zunächst in dem Speicher 2 gespeichert. Zur Darstellung werden sie im zeitlichen Raster des Hauptbildes wieder aus dem Speicher ausgelesen. Zu diesem Zweck müssen die Schreib- und Leseadressen durch getrennte Adreßzähler erzeugt werden.

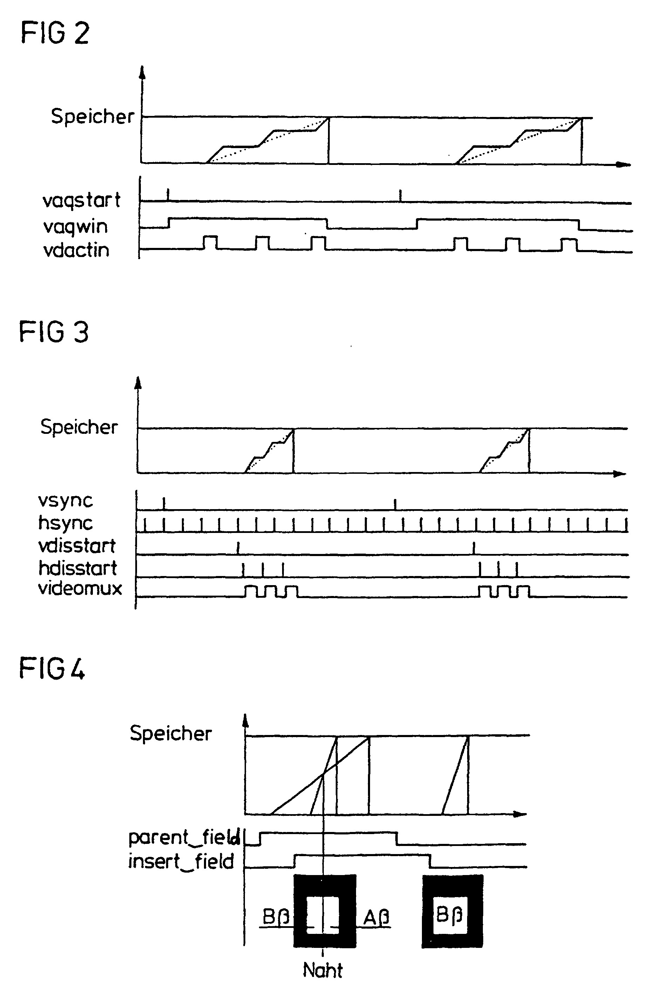

Figur 2 zeigt die entsprechenden Signalverläufe beim Einschreiben in den Speicher 2. Der Momentanwert des Schreibadreßzählers repräsentiert einen Schreibzeiger mit einem dezimierten Einfügebildpunkt in dem Speicher 2. Aus diesem Grund sollen die Begriffe "Schreibzeiger" und "Lesezeiger" verwendet werden.

Mit einem Impuls (vaqstart) beginnt ein Erfassungsfenster (vaqwin), und der Wert des Schreibadreßzeigers steigt mit jedem dezimierten Bildpunkt. Da nur der sichtbare Teil des Einfügebildes dezimiert wird, ruht der Schreibadreßzeiger immer dann, wenn aus der vertikalen Dezimationsstufe keine gültige Zeile zur Verfügung steht. Nach der letzten zu dezimierenden Zeile wird der Zeiger auf die Anfangsposition zurückgesetzt. In der Darstellung ergibt sich das Bild einer Rampe mit Absätzen.

Figur 3 zeigt die entsprechenden Signalverläufe beim Auslesen aus dem Speicher 2. Mit der Anzeigesteuerung 6 wird anhand der gewünschten Einblendposition des dezimierten Einfügebildes in dem Hauptbild der Zeitpunkt berechnet, zu dem ein Startsignal (vdisstart) erzeugt werden muß, um das Auslesen aus dem Speicher 2 zu beginnen. Mit jeder Zeile des Hauptbildes wird nun an der entsprechenden Einblendposition (hdisstart) eine Zeile des dezimierten Einfügebildes aus dem Speicher ausgelesen und in das Hauptbild eingeblendet (videomux).
In der Darstellung des Leseadreßzeigers ergibt sich wiederum das Bild einer Rampe mit Absätzen. Die Rampen von Lese- und Schreibadreßzeiger unterscheiden sich im Hinblick auf ihre mittlere Steigung. Diese soll im folgenden detailliert betrachtet werden, da sie die Geschwindigkeit darstellt, mit der innerhalb eines bestimmten Zeitraums eine Anzahl von Speicherzellen überstrichen wird.

Die Geschwindigkeit des Schreibadreßzeigers ändert sich mit dem Dezimationsfaktor, und zwar in der Weise, daß die Rampe des Schreibadreßzeigers mit steigendem Dezimationsfaktor flacher wird.

Figur 4 zeigt für den Fall der Darstellung im Vollbildmodus (Framemode) das Entstehen einer Naht. Wenn nur ein Halbbildspeicher vorhanden ist und das Einfügebild dezimiert wurde, wird der Schreibzeiger in der Regel durch den Lesezeiger überholt. Da die Quellen für das Einfügebild ("insert_field") und das Hauptbild ("parent_field") im allgemeinen asynchron zueinander sind, entsteht somit eine Naht. In Figur 4 ist dies durch den Schnittpunkt zwischen dem relativ langsamen Schreibzeiger und dem diesen überholenden Lesezeiger angedeutet, wobei mit den Großbuchstaben A, B die Rasterlage des Einfügebild und mit den griechischen Kleinbuchstaben $\alpha$, $\beta$ die Rasterlage des Hauptbildes bezeichnet ist.

In zeitlicher Hinsicht vor der Naht wird das aktuelle Halbbild gelesen, während nach der Naht ein Teil eines älteren Bildes wiedergegeben wird. Zu beachten ist hierbei, daß sich durch das Zeilensprungverfahren (Interlaced Mode) beim Überholen die Rasterlage ändert, die anschließend wieder korrigiert werden muß.

Die Naht wird insbesondere dann sehr deutlich sichtbar, wenn ein bewegtes Bild dargestellt wird, das heißt wenn sich in dem aktuellen und dem älteren Bild unterschiedliche Bewegungsphasen befinden. Wenn für das Haupt- und das Einfügebild unterschiedliche Standards verwendet werden, so kommt es zu einem Durchlaufen der Naht. Durch unterschiedliche Bildwiederholfrequenzen ändert sich mehrmals in jeder Sekunde die Kombination der Rasterlagen zu Beginn der Darstellung. Eine Korrektur in Abhängigkeit von dieser Fehllage ist sehr aufwendig. Außerdem kann das Bild in vertikaler Richtung sehr unruhig sein und als unangenehm empfunden werden.

Mit dem erfindungsgemäßen Verfahren bzw. der erfindungsgemäßen Schaltungsanordnung wird nun insbesondere im Vollbildmodus eine nahtlose Darstellung verschieden stark dezimierter Bilder möglich, ohne daß zwei getrennte Halbbildspeicher zur Verfügung stehen müssen.

Für die folgenden Erläuterungen soll angenommen werden, daß eine orthogonale Speichereinteilung gewählt wurde. Dadurch wird der Speicher in Zeilen mit festen Startadressen aufgeteilt. Die Länge einer solchen Zeile im Speicher wird von dem größten Bild bestimmt.

Ferner soll davon ausgegangen werden, daß das Einfügebild und das Hauptbild im gleichen Standard vorliegen. Beide Bildquelle können asynchron sein, sollen aber in ihrem Zeitraster zunächst keine Abweichungen voneinander haben. Wenn das Einfügebild vertikal und horizontal nicht dezimiert wird, reicht ein Halbbildspeicher aus, um eine nahtlose Bild-in-Bild Darstellung zu erzeugen, da sich die beiden Adreßzeiger aufgrund ihrer gleichen Geschwindigkeit nicht überholen können. Eine Ausnahme bildet der Fall der Rasterlagenkorrektur. Diese wird bei einer entsprechend vorliegenden Kombination aus Haupt- und Einfügebildlage in der ersten Zeile ausgeführt.

In diesem Fall springt der Leseadreßzeiger um eine Zeile. Bei diesem Sprung muß verhindert werden, daß der Schreibadreßzeiger überholt wird. Dies wird dadurch erreicht, daß Platz für zwei zusätzliche Zeilen im Speicher vorhanden ist.

Ferner ist eine geeignete Steuerung der Speicherzugriffe erforderlich. Der Speicher wird mit den Halbbildern umlaufend beschrieben. Dadurch verschiebt sich mit jedem neuen Halbbild die Startadresse um die Anzahl der zusätzlich vorhandenen Zeilen in Richtung niedrigerer physikalischer Adressen. Wird beim Schreiben die physikalische Endadresse des Speichers erreicht, so wird zurück an die Startadresse gesprungen.

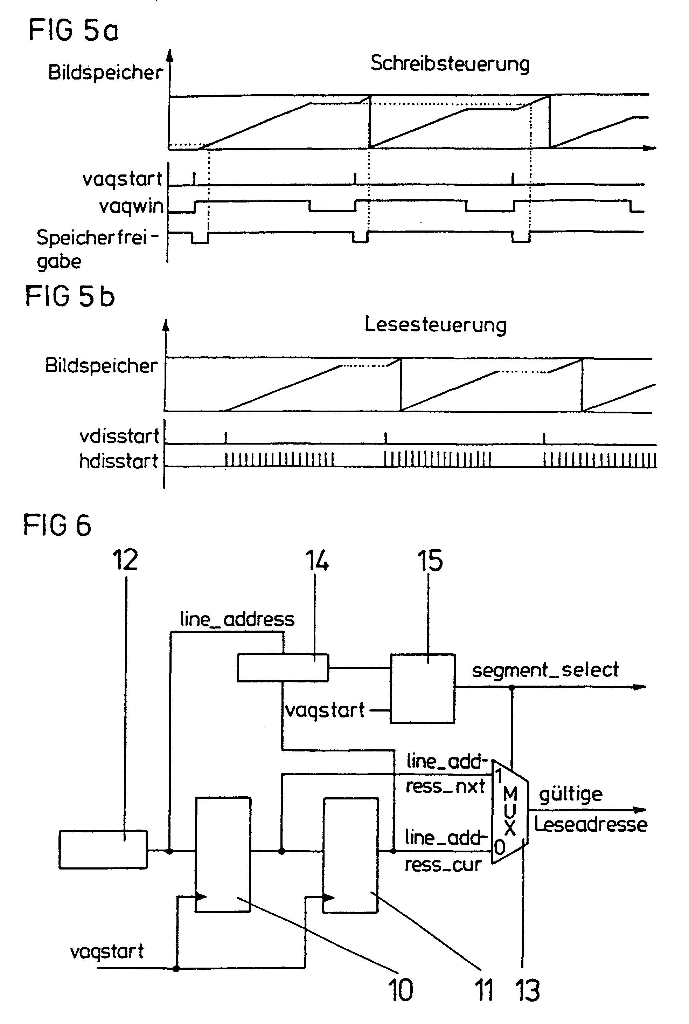

Figur 5 zeigt die entsprechenden Signalverläufe während der Schreibsteuerung (a) bzw. der Lesesteuerung (b). Demgemäß befindet sich also stets etwas mehr als ein Einfüge-Halbbild im Speicher. Ähnlich wie im Falle der Organisation von zwei Halbbildspeichern bestimmt auch hier der Schreibadreßzeiger über die Speichersegmentfreigabe. Die Signale "vaqstart", "vaqwin", "vdisstart" und "hdisstart" haben wieder die gleiche Bedeutung wie in den Figuren 2 und 3.

Figur 6 zeigt ein Blockschaltbild zur Auswahl des jeweils gültigen Speichersegmentes. Die Schaltung umfaßt einen Adreßzähler 12, dessen Ausgang mit einem ersten Register 10 und einem ersten Eingang eines Vergleicher 14 verbunden ist, ein zweites Register 11, an dessen Eingang der Ausgang des ersten Registers 10 liegt, sowie einen Multiplexer 13, dessen erster Eingang (line_adr_next) mit dem Ausgang des ersten Registers 10 und dessen zweiter Ausgang mit dem Ausgang des zweiten Registers 11 verbunden ist. Dieser letztgenannte Ausgang ist auch mit einem zweiten Eingang des Vergleichers 14 verbunden, dessen Ausgang an einem Flip-Flop 15 anliegt.

Für die Steuerung der Lesezugriffe werden die Startadressen des alten und des neuen Einfügehalbbildes in den Registern 10, 11 abgelegt. Mit dem Beginn eines neuen Halbbildes wird der ältere der beiden Registerinhalte verworfen, und die vormals neue Startadresse wird zur alten Adresse, während die gerade aktuelle Adresse zur neuen Startadresse wird. Sofern durch das umlaufende Beschreiben des Speichers der Beginn des älteren Einfügehalbbildes überschrieben wurde, kann es nicht mehr gelesen werden.

Für die Auswahl des gültigen Speichersegmentes wird ständig der Inhalt des Adreßzählers 12 (line_address) mit der Startadresse des älteren der beiden Halbbilder (line_address_cur) in dem Vergleicher 14 verglichen. Tritt eine Übereinstimmung auf, so wird das Flip-Flop 15 gesetzt und am Ausgang des Multiplexers 13 steht nun die Startadresse des neuen Halbbildes an. Wird ein neues Halbbild begonnen, so wird das Flip-Flop zurückgesetzt, und durch den Wechsel der Registerinhalte steht am Ausgang des Multiplexers 13 die gleiche Startadresse an, wie zuvor, bis auch diese wieder überschrieben wird. Auf diese Weise zeigt die Speicherfreigabe zu jedem Zeitpunkt auf ein gültiges Speichersegment. Durch den zusätzlich vorhandenen Speicherraum kann der Lesezeiger den Schreibzeiger auch bei einem Sprung infolge der Rasterlagenkorrektur nicht erreichen oder überholen.

Um den allgemeinen Anforderungen zu genügen, muß dieser Ablauf jedoch erweitert werden. Insbesondere im Fall von Videorecordern, die mit einem schnellen Vor- oder Rücklauf mit Bildwiedergabe betrieben werden, können erhebliche Abweichungen von der Norm auftreten. Hierbei ist zum Beispiel auch der Wartungszustand und der Verschleiß des Bandmaterials zu berücksichtigen. Die Speichersteuerung muß in der Lage sein, die Wirkungen eines gedehnten Bandes sowie Gleichlaufschwankungen des Laufwerksmechanismus auszugleichen. Voraussetzung hierbei ist jedoch, daß die Synchronimpulsabtrennung bei einem solchen Signal noch korrekt arbeitet.

Die vertikale Frequenz $f_V$ und die horizontale Frequenz $f_H$ stehen über die Zeilenzahl Z in folgendem Zusammenhang:

$$f_V = f_H / Z \qquad (5.1)$$

Von Interesse für den Algorithmus sind die Zeilenfrequenzen des Hauptbildes ($f_{Hp}$) und des Einfügebildes ($f_{Hi}$). Deren Schwankungen wirken sich unmittelbar auf die Schreib- und Lesegeschwindigkeit aus. Je größer die Zeilenfrequenz $f_{Hi}$ des Einfügebildes ist, desto mehr Speicherinhalt wird je Zeiteinheit geschrieben. Je geringer die Zeilenfrequenz $f_{Hp}$ des Hauptbildes ist, desto weniger Zeilen werden je Zeiteinheit gelesen. Umgekehrt gilt entsprechendes.

Wird in beiden Quellen der gleiche Standard benutzt, so gelten folgende Zusammenhänge, wobei $f_H$ die Sollzeilenfrequenz ist:

$$f_{Hi\_max} = f_H \, (1 + df_{Hi}) \qquad (5.2)$$

$$f_{Hi\_min} = f_H \, (1 - df_{Hi}) \qquad (5.3)$$

$$f_{Hp\_max} = f_H \, (1 + df_{Hp}) \qquad (5.4)$$

$$f_{Hp\_min} = f_H \, (1 - df_{Hp}) \qquad (5.5)$$

Es soll noch die Annahme gelten, daß keine vertikale Bilddezimation vorgenommen wird. Da es sich wieder um zwei asynchron zueinander stehende Quellen handelt, können Schreib- und Lesezeiger jede beliebige Position zueinander einnehmen. Ebenso können sich die Zeiger bei einer entsprechenden Kombination der Horizontalfrequenzen in beiden Richtungen überholen.

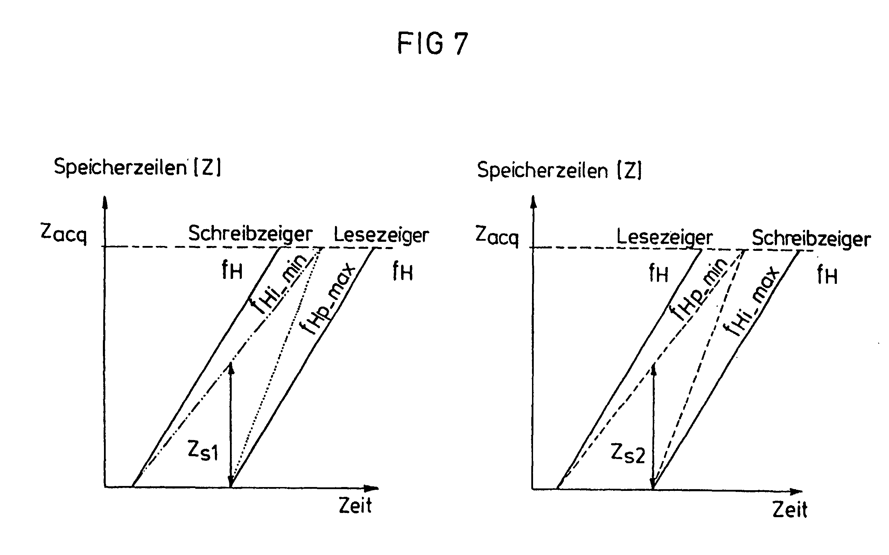

Figur 7 zeigt die für den jeweiligen Schreib- und Lesezeiger erforderlichen Speicherzeilen, wobei $Z_{acq}$ die Zahl der zur Akquisition herangezogenen Bildzeilen eines Halbbildes ist. Aus der Darstellung wird deutlich, wieviele Zeilen zusätzlich im Speicher vorhanden sein müssen, um ein Überholen der Zeiger in beiden Richtungen zu verhindern.

$$Z_{s2} = Z_{acq} \, \{(f_{Hi\_max} - f_{Hp\_min})/f_{Hi\_max} \} \qquad (5.6)$$

$$Z_{s1} = Z_{acq} \, \{(f_{Hp\_max} - f_{Hi\_min})/f_{Hp\_max} \} \qquad (5.7)$$

Die Gesamtmenge an zusätzlich erforderlichem Speicher für die nahtlose Bild-in-Bild Darstellung ergibt sich zu:

$$Zg = Z_{acq} + Z_{s1} + Z_{s2} \qquad (5.8)$$

Während des Schreibens befinden sich ein Teil eines alten und ein Teil eines neuen Halbbildes im Speicher. Durch die Position des Schreibadreßzeigers wird eines der beiden Halbbilder zum Lesen freigegeben. Wenn weniger als $Z_{s1}$ Zeilen des neuen Halbbildes geschrieben wurden, wird das alte Halbbild freigegeben. Andernfalls beträgt der Abstand zum Beginn des alten Halbbildes weniger als $Z_{s2}$ Zeilen, so daß das neue Halbbild gelesen werden kann.

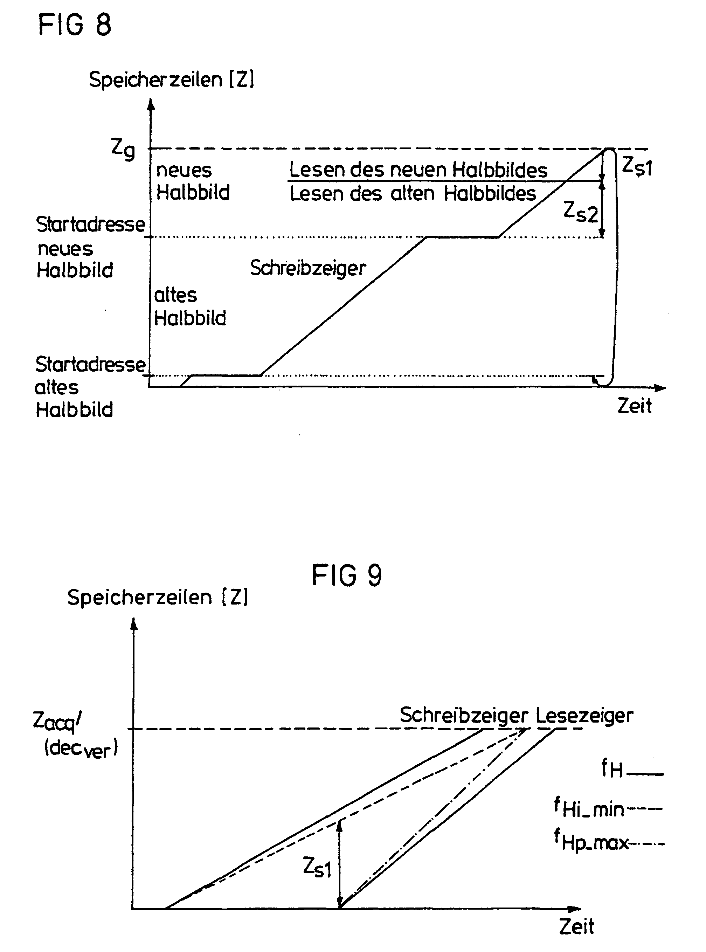

Figur 8 zeigt die Speicheraufteilung in dem Fall, in dem keine vertikale Dezimation vorgenommen wird.

Wird nun in horizontaler und vertikaler Richtung dezimiert, so hat dies Einfluß auf die Geschwindigkeit des Schreibadreßzeigers. Die entsprechenden Zusammenhänge sind in Figur 9 gezeigt. Der Anstieg der Rampe ist in dieser Figur geringer.

Zunächst soll davon ausgegangen werden, daß sich die Schreibgeschwindigkeit durch die Dezimation in einem erheblichen Maße ändert. Die Schwankungen durch Änderungen der Zeilenfrequenz sollen demgegenüber klein sein.

Daraus folgt, daß ein Überholen des Lesezeigers durch den Schreibzeiger aufgrund des Geschwindigkeitsunterschieds nicht mehr auftreten kann. Damit läßt sich nun anhand der Dezimationsfaktoren und der Schwankungsbreite der Bildquellen der Speicheraufwand für eine nahtlose Bild-in-Bild Darstellung ermittelt.

$$Z_{s1\_dec}(dec_{ver}) = (z_{acq}/dec_{ver})(1 - f_{Hi\_min}/(dec_{ver}\, f_{Hp\_max})) \qquad (5.9)$$

Der zusätzliche Bedarf an Zeilen sinkt mit wachsendem Dezimationsfaktor. Das Maximum ergibt sich für einen vertikalen Dezimationsfaktor $dec_{ver}$ von 1 (vertikal undezimiertes Bild).

Es soll nun auch die Möglichkeit des Überholens des Lesezeigers durch den Schreibzeiger berücksichtigt werden. Für kleine vertikale Dezimationsfaktoren ergibt sich ein weiterer zusätzlicher Speicherbedarf von:

$$Z_{s2\_dec} = (Z_{acq}/dec_{ver}) \, (1 - f_{Hp\_min}\, dec_{ver}/f_{Hi\_max}) \qquad (5.10)$$

Für ein sinnvolles Ergebnis muß der Ausdruck in der rechten Klammer positiv sein. Die Gültigkeit dieses Ausdrucks beschränkt sich also auf einen Bereich von:

"1" kleiner gleich "$dec_{ver}$" kleiner gleich

$$"(f_{Hi\_max}/f_{Hp\_min})" \qquad (5.11)$$

Für Werte, die größer sind, als die rechte Schranke, soll $Z_{s2\_dec}$ zu Null gesetzt werden.

Unter Berücksichtigung der Gültigkeitsbereiche ergibt sich der zusätzliche Speicherbedarf aus der Summe von $Z_{s1\_dec}$ und $Z_{s2\_dec}$. Die eingangs gemachten Untersuchungen sind ein Spezialfall für einen vertikalen Dezimationsfaktor von 1.

Der gesamte Speicherbedarf ergibt sich folglich zu:

$$Z_g(dec_{ver}) = Z_{acq}/dec_{ver} + Z_{s1\_dec} + Z_{s2\_dec} \text{ für}$$

"1" kleiner gleich "$dec_{ver}$" kleiner gleich

$$"(f_{Hi\_max}/f_{Hp\_min})" \qquad (5.12)$$

somit ergibt sich:

$$Z_g(dec_{ver}) = Z_{acq}/dec_{ver}(3 - f_{Hp\_min}\, dec_{ver}/f_{Hi\_max} -$$

$$f_{Hi\_min}/(dec_{ver}\, f_{Hp\_max})) \qquad (5.14)$$

Ansonsten gilt:

$$Z_g(dec_{ver}) = Z_{acq}/dec_{ver} + Z_{s1\_dec} \text{ für}$$

$$"dec_{ver}" \text{ größer } "(f_{Hi\_max}/f_{Hp\_min})" \qquad (5.13)$$

Daraus ergibt sich:

$$Z_g(dec_{ver}) = Z_{acq}/dec_{ver} \, (2 - f_{Hi\_min}/(dec_{ver}\, f_{Hp\_max})) \qquad (5.15)$$

Die Gesamtzahl der notwendigen Speicherzellen hat ihr Maximum bei einem vertikalen Dezimationsfaktor von 1. Mit wachsendem Dezimationsfaktor sinkt der Bedarf an Speicherzellen stark ab.

Ergänzend soll noch darauf hingewiesen werden, daß bei einer Erweiterung des Speichers 2 auf drei Segmente das erfindungsgemäße Verfahren auch bei einer Bildwiederholfrequenz von 100 Hz im AABB-Raster angewendet werden kann.

**Patentansprüche**

1. Verfahren zur Bild-in-Bild-Einblendung,
   wobei eine Folge von dezimierten Einfügebildern in eine Speichereinrichtung (2) eingeschrieben und zum Einblenden in eine Folge von Hauptbildern ausgelesen wird,
   **dadurch gekennzeichnet,**
   **dass** die Einfügebilder als Halbbilder unter fortlaufend inkrementierten Schreibadressen in entsprechende Speichersegmente beginnend bei entsprechenden Schreib-Startadressen umlaufend in die Speichereinrichtung (2) eingeschrieben werden, dass die Schreib-Startadresse jedes eingeschriebenen Halbbildes gespeichert (7) wird,
   **dass** mit jeder Inkrementierung der Schreibadresse durch Vergleich (14) der jeweils augenblicklichen Schreibadresse mit einer zuvor gespeicherten Schreib-Startadresse, die einem zuvor geschriebenen Segment zugeordnet ist, ein Überholsignal gebildet wird, welches anzeigt, ob die zuvor gespeicherte Schreib-Startadresse wieder erreicht und das der zuvor gespeicherten Schreib-Startadresse entsprechende Speichersegment überschrieben wird,
   **dass** entsprechend dem Ergebnis einer Auswertung des Überholsignals entweder das der zuletzt gespeicherten Schreib-Startadresse oder der vorletzten, zuvor gespeicherten Schreib-Startadresse entsprechende Speichersegment zum Auslesen ausgewählt wird, und
   **dass** das ausgewählte Speichersegment zur Einblendung in das jeweilige Hauptbild mit fortlaufend inkrementierten Leseadressen ausgelesen wird.

2. Verfahren nach Anspruch 1,
   **dadurch gekennzeichnet, dass** die Schreib- und Leseadressen fortlaufend von einer ersten Speicheradresse bis zu einer letzten Speicheradresse inkrementiert und nach dem Erreichen der letzten Speicheradresse jeweils wieder auf die erste Speicheradresse zurückgesetzt werden.

3. Verfahren nach Anspruch 1 oder 2,
   **dadurch gekennzeichnet, dass** zur Einblendung eines Einfügebildes in ein Hauptbild in einem Segmentpuffer (7) für zwei Einfügebilder jeweils die Bildlage und -größe in Form einer Anzahl von Zeilen sowie Pixeln je Zeile gespeichert wird.

4. Verfahren nach einem der vorhergehenden Ansprüche,
   **dadurch gekennzeichnet, dass** eine Rasterkorrektur durch einen Vergleich zwischen der Rasterlage eines darzustellenden Bildes und der Rasterlage eines gespeicherten Bildes sowie durch Überspringen oder Wiederholen einer Zeile erfolgt.

5. Verfahren nach einem der vorhergehenden Ansprüche,
   **dadurch gekennzeichnet,**
   **dass** mit jeder Inkrementierung der Schreibadresse die augenblickliche Schreibadresse mit der vorletzten gespeicherten Schreib-Startadresse verglichen und bei Auftreten einer Übereinstimmung die zuletzt gespeicherte Schreib-Startadresse als Lese-Startadresse zum Auslesen des entsprechenden Speichersegments verwendet wird, während im anderen Fall die vorletzte Schreib-Startadresse als Lese-Startadresse zum Auslesen des entsprechenden Speichersegments verwendet wird.

6. Schaltungsanordnung zur Einblendung einer Folge von dezimierten Einfügebildern in eine Folge von Hauptbildern,
   mit einer Schreibsteuerung (4) zum Einschreiben der Einfügebilder als Halbbilder unter fortlaufend inkrementierten Schreibadressen in entsprechende Speichersegmente einer Speichereinrichtung (2) beginnend bei entsprechenden Schreib-Startadressen,
   mit einem Segmentpuffer (7) zum Speichern der Schreib-Startadresse jedes in die Speichereinrichtung (2) eingeschriebenen Halbbildes, wobei von der Schreibsteuerung (4) mit jeder Inkrementierung der Schreibadresse durch Vergleich der jeweils augenblicklichen Schreibadresse mit einer zuvor gespeicherten Schreib-Startadresse, die einem zuvor geschriebenen Segment zugeordnet ist, ein Überholsignal erzeugbar ist, welches anzeigt, ob die zuvor gespeicherte Schreib-Startadresse wieder erreicht und das der zuvor gespeicherten Schreib-Startadresse entsprechende Speichersegment der Speichereinrichtung (2) überschrieben wird,
   mit einer Anzeigesteuerung (6), welcher das Überholsignal zugeführt ist, wobei von der Anzeigesteuerung (6) entsprechend dem Ergebnis einer Auswertung des Überholsignals entweder das der zuletzt gespeicherten Schreib-Startadresse oder der vorletzten, zuvor gespeicherten Schreib-Startadresse entsprechende Speichersegment zum Auslesen durch eine mit dem Segmentpuffer (7) verbundene Lesesteuerung (5) mit Hilfe von fortlaufend inkrementierten Leseadressen und zur Einblendung in das jeweilige Hauptbild auswählbar ist.

**7.** Schaltungsanordnung nach Anspruch 6,
**dadurch gekennzeichnet, dass** die Schreibsteuerung (4) und die Lesesteuerung (5) jeweils einen Adreßzähler (12) zum Inkrementieren der Schreib- bzw. Leseadressen aufweisen.

**8.** Schaltungsanordnung nach Anspruch 6 oder 7,
**dadurch gekennzeichnet, dass** mit der Anzeigesteuerung (6) eine Einblendposition eines Einfügebildes berechnet und ein entsprechendes Einblendsignal einer Einblendvorrichtung (3) zuführbar ist.

**9.** Schaltungsanordnung nach einem der Ansprüche 6 bis 8,
**dadurch gekennzeichnet, dass** mit der Anzeigesteuerung (6) eine Rasterkorrektur durch einen Vergleich zwischen der Rasterlage eines darzustellenden Bildes mit der Rasterlage eines gespeicherten Bildes sowie durch Überspringen oder Wiederholen einer Zeile durchführbar ist.

**10.** Schaltungsanordnung nach einem der Ansprüche 6 - 9,
**dadurch gekennzeichnet,**
**dass** ein Vergleicher (14) zum Vergleichen der von einem Adresszähler (12) bereitgestellten augenblicklichen Schreibadresse mit der vorletzten gespeicherten Schreib-Startadresse vorgesehen ist, wobei der Ausgang des Vergleichers (14) an einem Flip-Flop (15) zur Ansteuerung eines Multiplexers (13) anliegt, und
**dass** an einem ersten Eingang des Multiplexers (13) die vorletzte gespeicherte Schreib-Startadresse und an einem zweiten Eingang des Nultiplexers (13) die zuletzt gespeicherte Schreib-Startadresse anliegt, so dass von dem Multiplexer (13) bei Auftreten einer Übereinstimmung zwischen der augenblicklichen Schreibadresse des Adresszählers (12) und der vorletzten gespeicherten Schreib-Startadresse die zuletzt gespeicherte Schreib-Startadresse als Lese-Startadresse ausgegeben wird, während im anderen Fall von dem Multiplexer (13) die vorletzte gespeicherte Schreib-Startadresse als Lese-Startadresse ausgegeben wird.

**Claims**

**1.** A method for picture-in-picture insertion,
in which a sequence of decimated inset pictures is written to a memory device (2) and is read out for insertion into a sequence of main pictures,
**characterized**
**in that** the inset pictures are written to the memory device (2) in a circulating manner as fields under continuously incremented write addresses, the inset pictures being written to corresponding memory segments beginning at corresponding writing start addresses,
**in that** the writing start address of each written-in field is stored (7),
**in that**, each time the write address is incremented, by comparison (14) of the respective instantaneous write address with a previously stored writing start address assigned to a previously written segment, an overtake signal is formed which indicates whether the previously stored writing start address is reached again and the memory segment corresponding to the previously stored writing start address is overwritten,
**in that**, corresponding to the result of an evaluation of the overtake signal, either the memory segment corresponding to the last writing start address stored or the penultimate previously stored writing start address is selected for read-out, and
**in that** the selected memory segment is read out for insertion into the respective main picture with continuously incremented read addresses.

**2.** The method as claimed in claim 1,
**characterized in that** the write and read addresses are continuously incremented from a first memory address up to a last memory address and are in each case reset to the first memory address again after the last memory address has been reached.

**3.** The method as claimed in claim 1 or 2,
**characterized in that**, in order to insert an inset picture into a main picture, in a segment buffer (7) for two inset pictures, the picture position and size are in each case stored in the form of a number of lines and also pixels per line.

**4.** The method as claimed in one of the preceding claims,
**characterized in that** raster correction is effected by comparison between the raster position of a picture to be displayed and the raster position of a stored picture and also by skipping or repeating a line.

**5.** The method as claimed in one of the preceding claims, **characterized** **in that**, each time the write address is incremented, the instantaneous write address is compared with the penultimate writing start address stored and, in the event of correspondence, the last writing start address stored is used as reading start address for reading the corresponding memory segment, whereas otherwise the penultimate writing start address is used as reading start address for reading the corresponding memory segment.

**6.** A circuit arrangement for inserting a sequence of decimated inset pictures into a sequence of main pictures, having a write controller (4) for writing the inset pictures as fields under continuously incremented write addresses to corresponding memory segments of a memory device (2) beginning at corresponding writing start addresses, having a segment buffer (7) for storing the writing start address of each field written to the memory device (2), in which case an overtake signal can be generated by the write controller (4) each time the write address is incremented, by comparing the respective instantaneous write address with a previously stored writing start address assigned to a previously written segment, which overtake signal indicates whether the previously stored writing start address is reached again and the memory segment of the memory device (2) which corresponds to the previously stored writing start address is overwritten, having a display controller (6) to which the overtake signal is fed, in which case the display controller (6) can select, corresponding to the result of an evaluation of the overtake signal, either the memory segment corresponding to the last writing start address stored or the penultimate previously stored writing start address, for read-out by a read controller (5) - connected to the segment buffer (7) - with the aid of continuously incremented read addresses and for insertion into the respective main picture.

**7.** The circuit arrangement as claimed in claim 6, **characterized in that** the write controller (4) and the read controller (5) each have an address counter (12) for incrementing the write addresses and read addresses, respectively.

**8.** The circuit arrangement as claimed in claim 6 or 7, **characterized in that**, by means of the display controller (6), an insertion position of an inset picture is calculated and a corresponding insertion signal can be fed to an insertion apparatus (3).

**9.** The circuit arrangement as claimed in one of claims 6 to 8, **characterized in that**, by means of the display controller (6), raster correction can be carried out by comparison between the raster position of a picture to be displayed and the raster position of a stored picture and also by skipping or repeating a line.

**10.** The circuit arrangement as claimed in one of claims 6-9, **characterized** **in that** provision is made of a comparator (14) for comparing the instantaneous write address provided by an address counter (12) with the penultimate writing start address stored, the output of the comparator (14) being connected to a flip-flop (15) for driving a multiplexer (13), and **in that** the penultimate writing start address stored is present at a first input of the multiplexer (13) and the last writing start address stored is present at a second input of the multiplexer (13), with the result that, in the event of correspondence between the instantaneous write address of the address counter (12) and the penultimate writing start address stored, the multiplexer (13) outputs the last writing start address stored as reading start address, whereas otherwise the multiplexer (13) outputs the penultimate writing start address stored as reading start address.

**Revendications**

**1.** Procédé de mise en incrustation d'une image dans une autre, selon lequel une séquence d'images à insérer, qui sont comprimées, est mise en mémoire dans un composant mémoire (2) et en est extraite, par lecture, en vue de l'incrustation dans une séquence d'images principales, **caractérisé** **en ce que** les images à insérer sont mises en mémoire sous forme de trames dans le composant mémoire (2), par défilement en boucle, sous des adresses d'écriture incrémentées en continu, dans des segments de mémoire correspondants, en commençant à des adresses de départ d'écriture correspondantes, **en ce que** l'adresse de départ d'écriture de chaque trame mise en mémoire est mémorisée (7),

**en ce qu'**à chaque incrémentation de l'adresse d'écriture, par une comparaison (14) de l'adresse d'écriture instantanée respective à une adresse de départ d'écriture antérieurement mémorisée, qui est associée à un segment antérieurement mis en mémoire, il est formé un signal de dépassement, qui indique si l'adresse de départ d'écriture antérieurement mémorisée est à nouveau atteinte et si le segment de mémoire correspondant à l'adresse de départ d'écriture antérieurement mémorisée est surchargé,

**en ce que**, suivant le résultat d'une évaluation du signal de dépassement, soit le segment de mémoire correspondant à l'adresse de départ d'écriture mémorisée en dernier, soit le segment de mémoire correspondant à l'avant-dernière adresse de départ d'écriture antérieurement mémorisée, est sélectionné pour être extrait par lecture, et

**en ce que** le segment de mémoire sélectionné est extrait à l'aide d'adresses de lecture incrémentées en continu, en vue de l'incrustation dans l'image principale respective.

2. Procédé selon la revendication 1,
**caractérisé en ce que** les adresses d'écriture et de lecture sont incrémentées en continu depuis une première adresse de mémoire jusqu'à une dernière adresse de mémoire et, après que la dernière adresse de mémoire a été atteinte, sont de nouveau respectivement ramenées à la première adresse de mémoire.

3. Procédé selon la revendication 1 ou 2,
**caractérisé en ce qu'**en vue de l'incrustation d'une image à insérer dans une image principale, le positionnement et la taille de l'image sont chaque fois mémorisés, sous forme d'un nombre de lignes et de pixels par ligne, dans une mémoire-tampon de segments (7) pour deux images à insérer.

4. Procédé selon l'une des revendications précédentes,
**caractérisé en ce qu'**une correction de trame de balayage est effectuée au moyen d'une comparaison entre la position de la trame de balayage d'une image à reproduire et la position de la trame de balayage d'une image mémorisée, ainsi qu'en sautant ou en répétant une ligne.

5. Procédé selon l'une des revendications précédentes,
**caractérisé**
**en ce qu'**à chaque incrémentation de l'adresse d'écriture, l'adresse d'écriture instantanée est comparée à l'avant-dernière adresse de départ d'écriture mémorisée et, à l'apparition d'une coïncidence, l'adresse de départ d'écriture mémorisée en dernier est utilisée comme adressé de départ de lecture pour l'extraction du segment de mémoire correspondant, tandis que, dans l'autre cas, l'avant-dernière adresse de départ d'écriture est utilisée comme adresse de départ de lecture pour l'extraction du segment de mémoire correspondant.

6. Circuit pour la mise en incrustation d'une séquence d'images à insérer, qui sont comprimées, dans une séquence d'images principales, comportant
une commande d'écriture (4) pour la mise en mémoire des images à insérer, à l'état de trames, sous des adresses d'écriture incrémentées en continu, dans des segments de mémoire correspondants d'un composant mémoire (2), en commençant à des adresses de départ d'écriture correspondantes,
une mémoire-tampon de segments (7) destinée à mémoriser l'adresse de départ d'écriture de chaque trame mise en mémoire dans le composant mémoire (2), un signal de dépassement pouvant alors être produit par 1a commande d'écriture (4), à chaque incrémentation de l'adresse d'écriture, par comparaison de l'adresse d'écriture instantanée respective à une adresse de départ d'écriture antérieurement mémorisée, qui est associée à un segment antérieurement mis en mémoire, lequel signal de dépassement indique si l'adresse de départ d'écriture antérieurement mémorisée est à nouveau atteinte et si le segment de mémoire du composant mémoire (2), qui correspond à l'adresse de départ d'écriture antérieurement mémorisée, est surchargé,
une commande d'affichage (6), à laquelle le signal de dépassement est transmis, commande d'affichage (6) par laquelle soit le segment de mémoire correspondant à l'adresse de départ d'écriture mémorisée en dernier, soit le segment de mémoire correspondant à l'avant-dernière adresse de départ d'écriture antérieurement mémorisée, peut être sélectionnée suivant le résultat d'une évaluation du signal de dépassement, en vue d'être extrait par l'intermédiaire d'une commande de lecture (5) reliée à la mémoire-tampon de segments (7), à l'aide d'adresses de lecture incrémentées en continu, et en vue de l'incrustation dans l'image principale respective.

7. Circuit selon la revendication 6,
**caractérisé en ce que** 1a commande d'écriture (4) et la commande de lecture (5) comportent chacune un compteur d'adresses (12) pour l'incrémentation des adresses d'écriture, respectivement des adresses de lecture.

**8.** Circuit selon la revendication 6 ou 7,

**caractérisé en ce qu'**à l'aide de la commande d'affichage (6), une position d'incrustation d'une image à insérer est calculée et un signal de mise en incrustation correspondant peut être transmis à un dispositif de mise en incrustation (3).

**9.** Circuit selon l'une des revendications 6 à 8,

**caractérisé en ce qu'**à l'aide de la commande d'affichage (6), une correction de trame de balayage peut être exécutée par une comparaison entre la position de la trame de balayage d'une image à reproduire à la position de la trame de balayage d'une image mémorisée, ainsi qu'en sautant ou en répétant une ligne.

**10.** Circuit selon l'une des revendications 6-9,

**caractérisé**

**en ce qu'**il est prévu un comparateur (14) destiné à comparer l'adresse d'écriture instantanée, mise à disposition par un compteur d'adresses (12), à l'avant-dernière adresse de départ d'écriture mémorisée, la sortie du comparateur (14) étant appliquée à une bascule bistable (15) en vue du déclenchement d'un multiplexeur (13), et

**en ce qu'**à une première entrée du multiplexeur (13), est appliquée l'avant-dernière adresse de départ d'écriture mémorisée et, à une seconde entrée du multiplexeur (13), est appliquée l'adresse de départ d'écriture mémorisée en dernier, afin qu'à l'apparition d'une coïncidence entre l'adresse d'écriture instantanée du compteur d'adresses (12) et l'avant-dernière adresse de départ d'écriture mémorisée, l'adresse de départ d'écriture mémorisée en dernier soit délivrée en tant qu'adresse de départ de lecture, par le multiplexeur (13), alors que, dans l'autre cas, l'avant-dernière adresse de départ d'écriture mémorisée est délivrée en tant qu'adresse de départ de lecture par le multiplexeur (13).

EP 1 159 827 B1

FIG1

A

B

zusammengesetztes
Bildsignal

Einblendsignal

Segmentauswahl
Rasterkorrektur
Lesestart

Überholsignal

Synchronisationssignale Hauptbild   C

## FIG 2

Speicher

vaqstart
vaqwin
vdactin

## FIG 3

Speicher

vsync
hsync
vdisstart
hdisstart
videomux

## FIG 4

Speicher

parent_field
insert_field

Bβ    Aβ      Bβ

Naht

## FIG 5a

Bildspeicher

Schreibsteuerung

vaqstart

vaqwin

Speicherfreigabe

## FIG 5b

Bildspeicher

Lesesteuerung

vdisstart

hdisstart

## FIG 6

line_address

segment_select

vaqstart

line_add-
ress_nxt

gültige
Leseadresse

line_add-
ress_cur

vaqstart

# FIG 7

EP 1 159 827 B1

## FIG 8

Speicherzeilen [Z]

$Z_g$

neues
Halbbild

Lesen des neuen Halbbildes
Lesen des alten Halbbildes

$Z_{S1}$

$Z_{s2}$

Startadresse
neues
Halbbild

Schreibzeiger

altes
Halbbild

Startadresse
altes
Halbbild

Zeit

## FIG 9

Speicherzeilen [Z]

$Z_{acq}/$
$(dec_{ver})$

Schreibzeiger Lesezeiger

$f_H$ ———

$f_{Hi\_min}$ - - -

$f_{Hp\_max}$ - · - ·

$Z_{S1}$

Zeit